# EUROPÄISCHE PATENTSCHRIFT

(11) **EP 0 999 192 B1**
(45) Veröffentlichungstag und Bekanntmachung des Hinweises auf die Patenterteilung: **05.03.2003**
(21) Anmeldenummer: 99121110.3
(22) Anmeldetag: 22.10.1999
(51) Int. Cl.: C03C 17/36, C03C 17/34

(54) **Wärmedämmendes Schichtsystem**
Thermally insulating coating system
Système isolant thermique de couches

(30) Priorität: 30.10.1998 DE 19850023
(43) Veröffentlichungstag der Anmeldung: 10.05.2000
(73) Patentinhaber: Applied Films GmbH & Co. KG, 63755 Alzenau (DE)
(72) Erfinder: Szczyrbowski, Joachim, 63773 Goldbach (DE); Ruske, Manfred, 63456 Hanau (DE); Zmelty, Anton, 63768 Hösbach (DE)

(56) Entgegenhaltungen:
- EP-A- 0 499 950
- EP-A- 0 963 960
- US-A- 5 216 542
- SZCZYRBOWSKI J. ET AL.: "New low emissivity coating based on TwinMag (R) sputtered TiO2 and Si3N4 layers" THIN SOLID FILMS, Bd. 351, Nr. 1-2, August 1999 (1999-08), Seiten 254-259, XP004183104 Elsevier

## Beschreibung

Die Erfindung betrifft ein wärmedämmendes Schichtsystem für gebogene und/oder gehärtete Glasscheiben, umfassend mindestens eine von einer unteren und einer oberen Blockerschicht eingeschlossene Edelmetallschicht.

Bei derartigen Anwendungen wird das Schichtsystem auf die ebenen Glasscheiben, d. h. auf das Flachglas, aufgebracht. Anschließend wird das beschichtete Flachglas bis kurz unterhalb seiner Erweichungstemperatur erwärmt und durch schockartiges Abkühlen gehärtet. Das Biegen der Glasscheiben erfolgt zwischen dem Erwärmen und dem Abschrecken.

Es sind wärmereflektierende Schichtsysteme bekannt, bei denen die Glasscheiben nach dem Aufbringen des Schichtsystems gebogen und/oder gehärtet werden. Für die Wärmereflexion werden üblicherweise eine oder mehrere Edelmetallschichten, z. B. Silber, aufgrund ihres guten selektiven Reflexionsvermögens schon bei geringen Schichtdicken verwendet.

Weiterhin ist allgemein bekannt, zur Verbesserung der optischen Eigenschaften hochbrechende dielektrische Schichten oberhalb und unterhalb der Silberschicht anzuordnen. Beim Aufbringen von z. B. einer Metalloxidschicht auf das Silber und beim Biegen und/oder Härten der beschichteten Glassubstrate mit dem damit verbundenen Erwärmen kommt es zur Oxidation der Silberschicht und zur Diffusion des Silbers in die Metalloxidschicht. Die Oxidation ist dadurch bedingt, daß zum einen beim reaktiven Aufbringen der Metalloxidschicht der eingelassene Sauerstoff mit dem Silber reagiert und daß zum anderen beim Erwärmen der beschichteten Glasscheiben der Sauerstoff der Metalloxidschicht aktiviert wird und sich ebenfalls mit dem Silber verbindet. Zusätzlich wird die Diffusion des Silbers erhöht, wodurch die Dicke der Silberschicht abnimmt. Durch Oxidation und Diffusion wird das Reflexionsvermögen der beschichteten Glasscheiben verringert.

Bekannt ist ein Schichtsystem für gebogene und/oder gehärtete Glasscheiben (DE 196 32 788), bestehend aus dielektrischen Schichten, Zwischenschichten und mindestens einer Edelmetallschicht, wobei auf der ebenen Glasscheibe aufeinanderfolgend eine dielektrische Schicht, eine metallische Zwischenschicht, eine Silberschicht, eine weitere metallische Zwischenschicht und eine, an das Schichtsystem anschließende dielektrische Schicht aufgestäubt sind und die metallischen Zwischenschichten aus einer AlMgMn-Legierung bestehen.

Bekannt ist weiterhin eine mehrschichtige Struktur mit selektiver Lichtdurchlässigkeit (EP 0 035 906), bestehend aus einer Substratschicht A, mit einer transparenten blattartigen Struktur, die eine Silbermetall enthaltende, eine Dicke von 50 bis 300 Å aufweisende, Infrarot-Wellen reflektierende Schicht D trägt, sowie eine transparente dünne Schicht B₁ mit einem hohen Brechungsgrad zwischen den Schichten A und D und/oder einer transparenten dünnen Schicht B₂ mit einem hohen Brechungsindex für Schicht D und wahlweise einer transparenten Deckschicht E auf Schicht B₂ (falls anwesend) oder Schicht D, wobei eine Schicht C, bestehend aus einem Material, das aus Ti, Zr, In, Si, C, Co und Ni ausgewählt wurde und eine Dicke von 3 bis 100 Å aufweist, auf der Schicht D in Kontakt zu dieser auf dessen gegenüber liegenden Seite zur Schicht A steht.

Bekannt ist auch eine Glasscheibe mit einem transparenten Überzug (EP 0 304 234), der eine in Anwesenheit eines ein Anlaufen verursachenden Agens anlaufempfindliche Metallschicht und eine gesonderte Sperrschicht aufweist, die weiter von der Glasscheibenoberfläche entfernt ist als die Metallschicht, wobei die Sperrschicht eine Mehrzahl von Metalloxidschichten einschließlich einer Schicht aus einem Oxid eines Metalls Me1 aufweist, die zwischen Schichten eines Oxids eines Metalls Me2 gelegen ist, wobei Me1 Titan, Zirkonium oder Hafnium oder ein Gemisch hiervon ist und Me2 Zink, Zinn, Indium oder Wismut oder ein Gemisch hiervon.

Schließlich ist ein durch Aufsprühen beschichteter Glasgegenstand mit einem Glassubstrat bekannt (EP 0 722 913), das vom Glas nach auswärts gerichtet ein System aus folgenden Schichten aufweist:
Eine Schicht aus Si₃N₄
   mit einer Dicke von 300 bis 550 Å;
eine Schicht aus Nickel oder Nickelchrom
   mit einer Dicke von etwa 7 Å oder weniger;
eine Schicht aus Silber
   mit einer Dicke von etwa 70 bis 130 Å;
eine Schicht aus Nickel oder Nickelchrom
   mit einer Dicke von etwa 7 Å oder weniger; und
eine Schicht aus Si₃N₄
   mit einer Dicke von 700 bis 1100 Å;
eine Schicht aus Nickel oder Nickelchrom
   mit einer Dicke von etwa 7 Å oder weniger;
eine Schicht aus Silber
   mit einer Dicke von etwa 70 bis 90 Å;
eine Schicht aus Nickel oder Nickelchrom
   mit einer Dicke von etwa 7 Å oder weniger; und
eine Schicht aus Si₃N₄
   mit einer Dicke von 350 bis 700 Å.

Der vorliegenden Erfindung liegt die Aufgabe zugrunde, ein Schichtpaket des eingangs genannten Typs anzugeben, das ein Tempern und Biegen des Glassubstrats ermöglicht, ohne daß sich dadurch die optischen Eigenschaften des Schichtpakets nennenswert ändern. Insbesondere sollte der diffuse Anteil des transmittierten Lichtes (Haze) kleiner als 0,5 % sein.

Diese Aufgabe wird erfindungsgemäß dadurch gelöst, daß in die Edelmetallschicht eine unteroxidische NiCrOₓ-Schicht mit einer Dicke zwischen 0,1 und 3,0 nm eingebettet wird.

Vorzugsweise sind die die Edelmetallschichten einschließenden Blockerschichten aus unteroxidischem NiCrOₓ oder unteroxidischen NiCrOₓ und TiO₂ gebildet.

Mit Vorteil wird als Edelmetallschicht eine Silberschicht gewählt, wobei diese Silberschicht bevorzugt mit einem geringen Sauerstoffanteil aufgestäubt wird, der bei einer Kathodenleistung von 1,5 kW von 0 bis zu 10 sccm beträgt.

Mit TwinMag (Vorrichtung, bei der zwei Kathoden so an eine Wechselspannung angeschlossen sind, daß sie wechselweise Kathode und Anode einer Gasentladung sind) hergestellte Schichten (z. B. Si₃N₄, TiO₂) sind aufgrund einer starken Ionenbombardierung während des Sputterns (Aufstäubens) sehr kompakt, haben eine sehr hohe Dichte, sind sehr hart und mechanisch und chemisch sehr stabil. Aufgrund der hohen Dichte stellen sie eine sehr effektive Diffusionsbarriere für fremde Atome (Sauerstoff, Schwefel u.a.m.) dar. Weiterhin ermöglicht die TwinMag-Technologie die Herstellung von Schichten mit sehr glatter Oberfläche. Dieser Effekt verbessert die elektrischen Eigenschaften einer darauf aufgebrachten Ag-Schicht wesentlich. Alle diese Eigenschaften sind bei der Herstellung von temperbaren oder biegbaren Schichtsystemen erwünscht.

In einer Vakuumanlage mit vier Kathoden - einer TwinMag-Kathode mit metallischem Si-Target, einer TwinMag-Kathode mit Ti-Target, einem DC-Magnetron mit Ag-Target und einem DC-Magnetron mit NiCr-Target - wurden folgende Schichtsysteme hergestellt:
1. Glas/TiO₂/MiCrOₓ/TiO₂/AgOₓ/NiCrOₓ/AgOₓ/NiCrOₓ/Si₃N₄
2. Glas/TiO₂/NiCrOₓ/ AgOₓ/NiCrOₓ/AgOₓ/NiCrOₓ/Si₃N₄
3. Glas/TiO₂/NiCrOₓ/TiO₂/AgOₓ/NiCrOₓ/ Si₃N₄
4. Glas/TiO₂/ ZnO /Ag/ NiCrOₓ/ Si₃N₄

TiO₂ wurde mit einem Ti-Target in einer reaktiven Atmosphäre von O₂ und Ar gesputtert.

Der Prozeß wurde im metallischen Mode der Kathodencharakteristik geführt.

Si₃N₄ wurde mit einem Si-Target in einer reaktiven Atmosphäre von N₂ und Ar gesputtert.

NiCrOₓ wurde mit einem NiCr-Target in einer reaktiven Atmosphäre von O₂ und Ar gesputtert. Der Prozeß wurde im metallischen Mode der Kathodencharakteristik geführt. Die Menge des Sauerstoffs war so festgelegt, daß die Kathode sehr dicht am Übergangsbereich brannte.

Das Ag-Target wurde in einer reaktiven Atmosphäre von O₂ und Ar gesputtert. Die Menge des Sauerstoffs wurde so ausgewählt, daß der Widerstand der Ag-Schicht um nicht mehr als 10 % stieg.

Im zweiten Schichtsystem wurde auf die zweite TiO₂-Schicht verzichtet. Damit konnte die Auswirkung der TiO₂-Blockerschicht dargestellt werden. Die Aufgabe dieser Schicht ist die Lichtstreuung des Systems nach dem Tempern zu unterdrücken.

Als weiterer Vergleich wurde ein drittes Schichtsystem hergestellt, bei der die Ag-Schicht nicht aufgeteilt wurde. Die Dicke der Ag-Schicht ist hier gleich der Summe der Ag-Schichten im ersten System.

Als weiterer Versuch wurde das vierte Schichtsystem gesputtert, das eine normale Low-e-Beschichtung darstellt.

Diese Schichtsysteme wurden bis 6 min einer Temperatur von 700°C ausgesetzt.

An den untersuchten Schichtsystemen wurden folgende Messungen vor und nach dem Tempern durchgeführt:
1. Optische Transmission T_{y} (T_{y} = Transmission unter Berücksichtigung der Augenempfindlichkeit ≈ 550 nm) und Reflexion R_{y} (R_{y} = Reflexion)
2. Farbkoordinaten in Reflexion a* und b* (Glasseite)
3. Flächenwiderstand
4. Waschtest (Erichsen-Test)
5. Haze (Haze = diffuse Streuung)

Die Ergebnisse sind in den Tabellen I und II aufgelistet.

**TABELLE I**

| **Schicht** | **Dicke (nm)** **System 1** | **Dicke (nm)** **System 2** | **Dicke (nm)** **System 3** | **Dicke (nm)** **System 4** |
|---|---|---|---|---|
| Glas | 4 mm | 4 mm | 4 mm | 4 mm |
| | | | | |
| TiO₂ | 16 nm | 22 nm | 16 nm | 22 nm |
| NiCrOₓ | 6 | 6 | 6 | |
| TiO₂ | 6 | | 6 | |
| ZnO | | | | 6 |
| Ag | | | | 16 |
| AgOₓ | 8 | 8 | 16 | |
| NiCrOₓ | 1 | 1 | | |
| AgOₓ | 8 | 8 | | |
| NiCrOₓ | 4,5 | 4,5 | 4,5 | 2 |
| Si₃N₄ | 52 | 52 | 52 | 52 |

**TABELLE II**

| **Schicht** | **System 1** | | **System 2** | | **System 3** | | **System 4** | |
|---|---|---|---|---|---|---|---|---|
| | vor | nach | vor | nach | vor | nach | vor | nach |
| T_{y} (%) | 78 | 80 | 77 | 80 | 80 | 82 | 81 | 85 |
| R_{y} (%) | 11,5 | 12 | 11,5 | 12,1 | 11,2 | 11,5 | 11,0 | 2,5 |
| a* | 0,2 | 1,0 | 0,1 | 0,2 | 0,2 | 1,5 | -1,0 | 2,0 |
| b* | -3,0 | -4,7 | -3,4 | -6,2 | -3,0 | -4,7 | -3,0 | -4,9 |
| R (Ohm) | 4,8 | 3,8 | 4,8 | 3,5 | 3,7 | 2,5 | 4,0 | 6,0 |
| Haze(%) | 0,2 | 0,25 | 0,2 | 0,75 | 0,2 | 0,35 | 0,2 | 2,0 |
| Waschtest | sehr gut | sehr gut | sehr gut | sehr gut | sehr gut | schlecht | | |

Bei dem in den vorstehenden Tabellen genannten Schichtsystem 1 haben die untere und die obere Schicht die Funktion von herkömmlichen low-e-Schichten. Diese Schichten sollten sehr dicht sein, um die Diffusion von Sauerstoff oder anderen Atomen in die Silberschicht zu verhindern.

Die obere und die untere NiCr-Blockerschicht sorgen für die gewünschte Temperaturstabilität des Schichtsystems. Sie werden zweckmäßigerweise im metallischen mode der Kathodencharakteristik, möglichst nahe im Bereich des Übergangs in den oxidischen mode, aufgesputtert. Die NiCr-Blocker zwischen den beiden Ag-Schichten bewirken die Wischfestigkeit nach dem Tempern. Ihre Haltbarkeit hängt ab von ihrer Dicke und dem Grad ihrer Oxidation: Je dicker die Blocker sind, um so mechanisch unempfindlicher ist das Schichtpaket.

Die zweite TiO₂-Schicht reduziert die Eintrübung bzw. Lichtstreuung nach der Wärmebehandlung des beschichteten Substrats. Der genau bemessene Anteil von Sauerstoff in der Silberschicht bewirkt sowohl die Temperaturbeständigkeit als auch die mechanische Widerstandsfähigkeit des Schichtpakets. Das obere Limit des Sauerstoffanteils bestimmt die Beständigkeit der Silberschicht und sollte unter 3 % betragen.

## Patentansprüche

1. "Wärmedämmendes Schichtsystem für gebogene und/oder gehärtete Glasscheiben, umfassend mindestens eine von einer unteren und einer oberen Blockerschicht eingeschlossenen Edelmetallschicht, **dadurch gekennzeichnet, dass** in der Edelmetallschicht eine unteroxidische NiCrOx-Schicht mit einer Dicke zwischen 0,1 nm und 3,0 nm eingebettet ist".

2. Schichtsystem nach Anspruch 1, **dadurch gekennzeichnet, daß** die die Edelmetallschicht einschließenden Blockerschichten aus unteroxidischem NiCrOₓ oder unteroxidischem NiCrOₓ und TiO₂ gebildet sind.

3. Schichtsystem nach Anspruch 1 und/oder 2, **dadurch gekennzeichnet, daß** die Edelmetallschicht eine Silberschicht ist.

4. Schichtsystem nach einem oder mehreren der vorhergehenden Ansprüche, **dadurch gekennzeichnet, dass** der elektrische, mit der Vierpunktmethode gemessene, Flächenwiderstand der Edelmetallschicht die Werte einer in reinem Argon abgeschiedener Edelmetallschicht um nicht mehr als 10 % übersteigt".

5. Schichtsystem nach Anspruch 1, **dadurch gekennzeichnet, daß** es von der Glasscheibe nach auswärts gerichtet folgende Schichten aufweist:
eine Schicht aus TiO₂ mit einer Dicke von 16 nm,
eine Schicht aus NiCrOₓ mit einer Dicke von 6 nm,
eine Schicht aus TiO₂ mit einer Dicke von 6 nm,
eine Schicht aus Ag mit eingebettetem NiCrOₓ mit
einer Dicke von 1 nm,
eine Schicht aus NiCrOₓ mit einer Dicke von 4,5 nm,
eine Schicht aus Si₃N₄ mit einer Dicke von 50 nm.

6. Schichtsystem nach Anspruch 1, **dadurch gekennzeichnet, daß** jeweils zwischen Blockerschicht und Edelmetallschicht eine die Lichtstreuung unterdrückende TiO₂-Schicht angeordnet ist.

7. Schichtsystem nach Anspruch 1, **dadurch gekennzeichnet, daß** es von der Glasscheibe nach auswärts folgende Schichten aufweist:
eine Schicht aus TiO₂ mit einer Dicke von 16 nm,
eine Schicht aus NiCrOₓ mit einer Dicke von 6 nm,
eine Schicht aus TiO₂ mit einer Dicke von 6 nm,
eine Schicht aus AgOₓ mit einer Dicke von 8 nm,
eine Schicht aus NiCrOₓ mit einer Dicke von 2 nm,
eine Schicht aus AgOₓ mit einer Dicke von 8 nm,
eine Schicht aus NiCrOₓ mit einer Dicke von 4 nm,
eine Schicht aus Si₃N₄ mit einer Dicke von 50 nm.

## Claims

1. Heat-insulating system of layers for curved and/or toughened glass plates, comprising at least one precious metal layer enclosed by a lower and an upper blocker layer, **characterised in that** a suboxide NiCrOₓ layer having a thickness of between 0.1 nm and 3.0 nm is embedded in the precious metal layer.

2. System of layers according to claim 1, **characterised in that** the blocker layers enclosing the precious metal layer are formed from suboxide NiCrOₓ or suboxide NiCrOₓ and TiO₂.

3. System of layers according to claim 1 and/or 2, **characterised in that** the precious metal layer is a silver layer.

4. System of layers according to one or more of the preceding claims, **characterised in that** the electrical surface resistance, as measured by the four-point method, of the precious metal layer exceeds the values of a precious metal layer deposited in pure argon by not more than 10%.

5. System of layers according to claim 1, **characterised in that** it contains the following layers, proceeding outwards from the glass plate:
a layer of TiO₂ having a thickness of 16 nm,
a layer of NiCrOₓ having a thickness of 6 nm,
a layer of TiO₂ having a thickness of 6 nm,
a layer of Ag containing embedded NiCrOₓ having a thickness of 1 nm,
a layer of NiCrOₓ having a thickness of 4.5 nm,
a layer of Si₃N₄ having a thickness of 50 nm.

6. System of layers according to claim 1, **characterised in that** a TiO₂ layer which suppresses the scattering of light is disposed between each blocker layer and the precious metal layer.

7. System of layers according to claim 1, **characterised in that** it contains the following layers, proceeding outwards from the glass plate:
a layer of TiO₂ having a thickness of 16 nm,
a layer of NiCrOₓ having a thickness of 6 nm,
a layer of TiO₂ having a thickness of 6 nm,
a layer of AgOₓ having a thickness of 8 nm,
a layer of NiCrOₓ having a thickness of 2 nm,
a layer of AgOₓ having a thickness of 8 nm,
a layer of NiCrOₓ having a thickness of 4 nm,
a layer of Si₃N₄ having a thickness of 50 nm.

## Revendications

1. Système de couches thermiquement isolant destiné à des plaques de verre courbées et/ou durcies comprenant au moins une couche de métal précieux renfermée par une couche de blocage supérieure et une couche de blocage inférieure, **caractérisé en ce qu'**une couche de NiCrOₓ sous-oxydante avec une épaisseur comprise entre 0,1 nm et 3,0 nm est encastrée dans la couche de métal précieux.

2. Système de couches selon la revendication 1, **caractérisé en ce que** les couches de blocage renfermant la couche de métal précieux sont formées de NiCrOₓ sous-oxydant ou de NiCrOₓ et TiO₂ sous-oxydants.

3. Système de couches selon la revendication 1 et/ou 2, **caractérisé en ce que** la couche de métal précieux est une couche d'argent.

4. Système de couches selon l'une ou plusieurs quelconques des revendications précédentes, **caractérisé en ce que** la résistivité électrique en surface, mesurée avec le procédé à quatre points, de la couche de métal précieux dépasse la valeur d'une couche de métal précieux précipité dans de l'argon pur d'au plus 10 %.

5. Système de couches selon la revendication 1, **caractérisé en ce qu'**il présente à partir de la plaque de verre les couches suivantes disposées en allant vers l'extérieur :
une couche de TiO₂ avec une épaisseur de 16 nm,
une couche de NiCrOₓ avec une épaisseur de 6 nm,
une couche de TiO₂ avec une épaisseur de 6 nm,
une couche de Ag avec du NiCrOₓ encastré avec une épaisseur de 1 nm,
une couche de NiCrOₓ avec une épaisseur de 4,5 nm,
une couche de Si₃N₄ avec une épaisseur de 50 nm.

6. Système de couches selon la revendication 1, **caractérisé en ce qu'**il est à chaque fois disposé entre la couche de blocage et la couche de métal précieux une couche de TiO₂ supprimant la diffusion de la lumière.

7. Système de couches selon la revendication 1, **caractérisé en ce qu'**il présente à partir de la plaque de verre les couches suivantes disposées en allant vers l'extérieur :
une couche de TiO₂ avec une épaisseur de 16 nm,
une couche de NiCrOₓ avec une épaisseur de 6 nm,
une couche de TiO₂ avec une épaisseur de 6 nm,
une couche de AgOₓ avec une épaisseur de 8 nm,
une couche de NiCrOₓ avec une épaisseur de 2 nm,
une couche de AgOₓ avec une épaisseur de 8 nm,
une couche de NiCrOₓ avec une épaisseur de 4 nm,
une couche de Si₃N₄ avec une épaisseur de 50 nm.
